# EUROPÄISCHE PATENTSCHRIFT

(11) **EP 0 490 081 B1**
(45) Veröffentlichungstag und Bekanntmachung des Hinweises auf die Patenterteilung: **13.07.1994**
(21) Anmeldenummer: 91118876.1
(22) Anmeldetag: 06.11.1991
(51) Int. Cl.: B64D 9/00, B64C 1/10

(54) **Vorrichtung zum Abfangen von Ladegut in Frachträumen von Flugzeugen**
Load-arresting device for the cargo space of an aircraft
Dispositif pour arrêter une charge dans la soute à fret d'un avion

(30) Priorität: 05.12.1990 DE 4038709
(43) Veröffentlichungstag der Anmeldung: 17.06.1992
(73) Patentinhaber: Daimler-Benz Aerospace Airbus Gesellschaft mit beschränkter Haftung, 21129 Hamburg (DE)
(72) Erfinder: Hararat-Tehrani, Mohamad, W-2800 Bremen (DE)
(74) Vertreter: Hansmann, Dierk, Dipl.-Ing.

(56) Entgegenhaltungen:
- EP-A- 0 354 403
- AU-B- 488 463
- DE-A- 3 827 278
- DE-A- 3 827 281
- FR-A- 2 050 914
- US-A- 4 780 034

## Beschreibung

Die Erfindung bezieht sich auf eine Vorrichtung zum Abfangen von Ladegut in Frachträumen von Flugzeugen, bestehend aus einer zwischen Frachtraum und Passagierraum eines Flugzeugs angeordneten Abfangwand, die über energieaufnehmende und mit einer Sitzschiene verbundenen Dämpferelementen zur Aufbaustruktur hin abgestützt ist.

Aus der DE-PS 38 27 281 ist eine Abfangwand in einem Flugzeug bekannt, die zur Aufbaustruktur über einen Dämpfer gehalten und der mechanisch energieaufnehmend ausgeführt ist. Bei dieser Ausführung ist die Wand mit dem Dämpfer über ein Gelenk verbunden und die Wand selbst ist über eine Rolle am Boden rollend abgestützt.

Weiterhin ist nach der DE-PS 38 27 278 ein am Boden eines Flugzeuges starr befestigtes Wandelement vorgeschlagen worden, das zwischen zwei Wänden angeordnete, energieaufnehmende Dämpfer aufweist.

Aufgabe der Erfindung ist es, eine Abfangwand für Lasten in einem Flugzeug der gattungsgemäßen Art zu schaffen, die eine einfache Montage ermöglicht und energieaufnehmend ausgebildet und gehalten wird.

Diese Aufgabe wird erfindungsgemäß durch die Merkmale des Anspruchs 1 gelöst. Weitere vorteilhafte Ausgestaltungen sind durch die Merkmale der Unteransprüche gekennzeichnet.

Die mit der Erfindung im wesentlichen erzielten Vorteile bestehen darin, daß die Abfangwand sowohl in sich energieaufnehmend über die Dämpfer zwischen den beiden Wänden des Wandelements wirkt als auch an der Bodenstruktur über Dämpfer energieaufnehmend gehalten ist.

Hierdurch können sich die Dämpfer zwischen den Wänden und am Boden ergänzen, indem sich die Wände bei einem Crash gegeneinander bewegen können, aber die Struktur durch die bodenseitig verankerten Dämpfer nicht beschädigt werden. Auch kann eine dünnere Wand als bei der Ausführung nach der DE-PS 38 27 278 eingesetzt werden.

Durch ein zu den Dämpfern auf einer Querachse gehaltenes Tragteil für die Abfangwand sowie durch die Anlenkung der Dämpfer an einem bodenseitig an der Sitzschiene verankerten Halteklotz, wird eine gewisse Bewegungsfreiheit der Wand bei einem Crash um diese Querachse gewährleistet.

Die Dämpferelemente mit jeweils einem Tragteil sind in einfacher Weise mittels des Halteklotzes über Schrauben an der Sitzschiene befestigbar, die in Längsrichtung des Flugzeugs in Abständen verlaufen.

Die Abfangwand kann somit nur in die Tragteile eingesetzt werden, ohne daß es einer besonderen Befestigung, wie beispielsweise nach der Ausführung gemäß der DE-PS 38 27 281 bedarf.

Ein Ausführungsbeispiel der Erfindung ist in der Zeichnung schematisch dargestellt. Es zeigen:

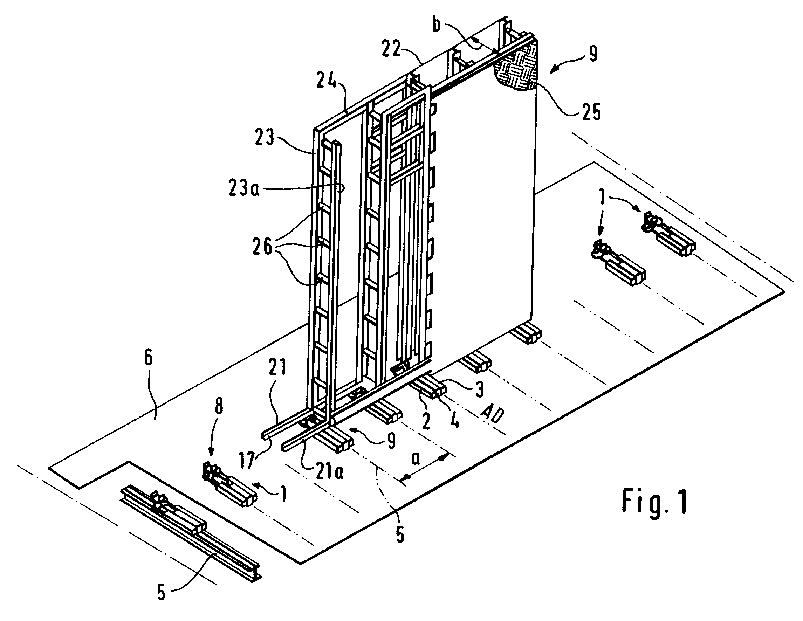

- Fig. 1: eine schaubildliche Darstellung einer bodenseitig in Dämpfern gehaltenen Abfangwand,
- Fig. 2: eine vergrößerte Darstellung eines Dämpferelements in verankerter Stellung an einer Sitzschiene.

Die Vorrichtung umfaßt im wesentlichen ein Dämpferelement 1 mit zwei auf mechanischem Wege energieabsorbierenden Dämpfern 2 und 3. Diese sind über einen Halteklotz 4 mit einer Sitzschiene 5 am Boden 6 eines Flugzeugs über mehrere Schrauben 7 befestigt. Mit den Dämpfern 2 und 3 ist über ein Tragteil 8 eine Abfangwand 9 verbunden.

Die Dämpfer 2 und 3 sind parallel zueinander angeordnet und weisen zwischenliegend den Halteklotz 4 auf, an dem sie gemeinsam um eine erste Querachse 10 verschwenkbar sind. Eine zweite Querachse 11 ist an den freien Enden der Stangen 12, 13 der Dämpfer 2, 3 vorgesehen, auf der das Tragteil 8 zwischen den Stangen 12, 13 angeordnet und ebenfalls relativ schwenkbeweglich zwischen den Dämpfern 2, 3 gehalten ist.

Das Tragteil 8 weist eine u-profilförmige Aufnahme 14 mit zwei Querschenkeln 15 und 16 auf, zwischen denen die Unterkante 17 der Abfangwand 9 aufgenommen wird. Die Dämpfer 2 und 3 sowie das Tragteil 8 stützen sich auf der Fläche 18 bzw. 19 der Sitzschiene 5 ab und verschieben sich bei einem Crash auch auf diesen Flächen.

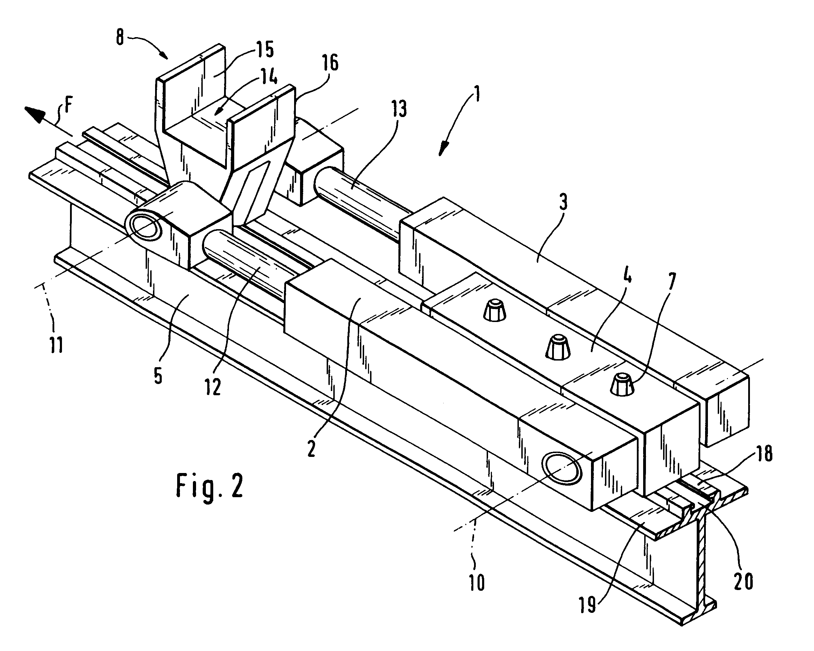

Zur Aufnahme und Festlegung der Wand 9 sind in meist gleichen Abständen a die Dämpferelemente 1 am Boden vorgesehen. Wie aus Fig. 2 näher zu erkennen ist, wird die Befestigung über den Halteklotz 4 an der Sitzschiene 5 im Bereich der Führung 20 vorgenommen, in die entsprechend ausgebildete Schrauben 7 eingeführt und befestigt werden.

Die Abfangwand 9 umfaßt ein - in Flugzeugrichtung gesehen - vorderes Grundprofil 21, an dem zur Bildung einer vorderen senkrechten Wand 22 senkrechte Tragprofile 23 befestigt sind, die mit einer oberen Profilstrebe 24 verbunden werden. Einen gleichen Aufbau weist die im Abstand b angeordnete zweite Wand 25 mit dem Trageprofil 23 a und dem Grundprofil 21 a auf. Zwischen beiden Wänden 22 und 25 sind mehrere energieabsorbierende Dämpfer 26 angeordnet, die bei einem Crash die auftreffenden Lasten unter Energieverzehr auffangen und zusammen mit den bodenseitigen Dämpferelemente 1 zusammenarbeiten. Durch die Querachsen 10 und 11 der Dämpferelemente 1 ist eine gewisse Bewegungsfreiheit der Abfangwand 9 bei einem Crash möglich, so daß auch die Bodenstruktur von Schäden weitestgehend freizuhalten ist.

Die Dämpfer 2 und 3 des Elements 1 sowie die Dämpfer 26 in der Abfangwand 9 bestehen aus einem rohrförmigen Aufnahmeelement, in dem durch Aufweitung dieses Elements mittels Kugelköpfen oder dergleichen eine mechanische Verformung und somit eine mechanische Energieaufnahme erfolgt. Entsprechende Ausführungen von Dämpfern sind bekannt aus der DE-PS 38 27 280 sowie aus der DE-PS 38 27 281, auf die hiermit Bezug genommen wird.

## Patentansprüche

1. Vorrichtung zum Abfangen von Ladegut in Frachträumen von Flugzeugen, bestehend aus einer zwischen Frachtraum und Passagierraum eines Flugzeugs angeordneten Abfangwand, die über energieaufnehmende und mit einer Sitzschiene verbundenen Dämpferelementen zur Aufbaustruktur hin abgestützt ist, dadurch gekennzeichnet, daß das Dämpferelement (1) zwei parallel zueinander angeordnete Einzeldämpfer (2 und 3) umfaßt, die an einem zwischenliegenden Halteklotz (4) um eine erste Querachse (10) verschwenkbar mit der Sitzschiene (5) verbunden sind und an einer die freien Enden der Dämpferstangen (12, 13) verbindenden zweiten Querachse (11) ein zwischenliegendes Tragteil (8) verschwenkbar gelagert ist, das die Abfangwand (9) abstützend aufnimmt, welche aus zwei über energieaufnehmende Dämpfer (26) miteinander verbundenen Wänden (22 und 25) besteht.

2. Vorrichtung nach Anspruch 1, dadurch gekennzeichnet, daß das Tragteil (8) eine u-profilförmige Aufnahme (14) mit zwei Schenkeln (15 und 16) für eine Unterkante (17) der Abfangwand (9) aufweist und sich an der Sitzschiene (5) abstützt.

3. Vorrichtung nach den Ansprüchen 1 oder 2, dadurch gekennzeichnet, daß die Dämpferelemente (1) in Abständen (a) zueinander angeordnet sind und ein vorderes Tragprofil (21) der Wand (9) in der Aufnahme (14) des Tragteils (8) formschlüssig gehalten und ein hinteres Tragprofil (21a) am Dämpferelement aufliegend gelagert ist.

4. Vorrichtung nach einem der Ansprüche 1 bis 3, dadurch gekennzeichnet, daß die Tragprofile (21 und 21a) im Abstand (b) zueinander angeordnet sind und in Verbindung mit senkrechten Tragprofilen (23 und 23a) senkrechte Stützebenen (Wände 22 und 25) bilden, die über die in horizontalen Ebenen angeordneten energieaufnehmenden Dämpfer (26) verbunden sind.

## Claims

1. Device for cushioning cargo in cargo compartments of aircraft, consisting of a cushioning wall which is arranged between the cargo compartment and the passenger compartment of an aircraft and is supported towards the body structure by means of energy-absorbing damper elements which are connected to a seating rail, characterised in that the damper element (1) comprises two individual dampers (2 and 3) which are arranged parallel to one another and connected to the seating rail (5) so as to be pivotable about a first transverse axis (10) at an intermediate holding block (4), and an intermediate bearing part (8) is pivotably mounted at a second transverse axis (11), which connects the free ends of the damper rods (12, 13), and holds the cushioning wall (9) in a supporting manner, the latter consisting of two walls (22 and 25) which are connected together via energy-absorbing dampers (26).

2. Device according to claim 1, characterised in that the bearing part (8) comprises a recess in the form of a channel section with two side pieces (15 and 16) for a bottom edge (17) of the cushioning wall (9) and is supported on the seating rail (5).

3. Device according to claim 1 or 2, characterised in that the damper elements (1) are arranged at distances (a) from one another, a front bearing section (21) of the wall (9) is positively held in the recess (14) of the bearing part (8), and a rear bearing section (21a) is mounted in a supported manner on the damper element.

4. Device according to any one of claims 1 to 3, characterised in that the bearing sections (21 and 21a) are arranged at a distance (b) from one another and, together with vertical bearing sections (23 and 23a), form vertical support planes (walls 22 and 25) connected via the energy-absorbing dampers (26), which are arranged in horizontal planes.

## Revendications

1. Dispositif pour asservir des chargements dans les soutes des avions, consistant en une paroi de saisie disposée entre la soute et la cabine des passagers d'un avion, paroi qui s'appuie sur une structure de montage au moyen d'éléments amortisseurs absorbant de l'énergie et reliés à un rail de positionnement, dispositif caractérisé en ce que l'élément amortisseur (1) comprend deux amortisseurs séparés (2 et 3) disposés parallèlement l'un à l'autre, qui sont reliés au rail de positionnement (5) de façon à pouvoir pivoter sur un bloc de maintien (4) en position intermédiaire autour d'un premier axe transversal (10) et en ce que sur un deuxième axe transversal (11) reliant les extrémités libres des tiges d'amortisseur (12, 13) est montée une pièce de support (8) en position intermédiaire qui reçoit en la soutenant la paroi de saisie (9), qui consiste en deux parois (22, 23) reliées l'une à l'autre par l'intermédiaire d'amortisseurs absorbant de l'énergie (26).

2. Dispositif selon la revendication 1, caractérisé en ce que la pièce de support (8) présente un logement (14) ayant un profil en forme en U, avec deux branches (15 et 16) pour un bord inférieur (17) de la paroi de saisie (9) et en ce qu'elle s'appuie sur le rail de positionnement.

3. Dispositif selon les revendications 1 ou 2, caractérisé en ce que les éléments amortisseurs (1) sont disposés à des distances (a) les uns par rapport aux autres et en ce qu'un profilé antérieur de support (21) de la paroi (9) est maintenu dans le logement (14) de la pièce de support (8) par interpénétration par la forme et un profilé de support postérieur (21a) est monté de façon à reposer sur l'élément amortisseur.

4. Dispositif selon l'une des revendications 1 à 3, caractérisé en ce que les profilés de support (21 et 21a) sont disposés à une certaine distance (b) l'un de l'autre et forment en liaison avec des profilés de support verticaux (23 et 23a) des plans d'appui verticaux (parois 22 et 25), qui sont reliés par l'intermédiaire des amortisseurs (26), absorbant de l'énergie, disposés dans des plans horizontaux.
